# EUROPEAN PATENT APPLICATION

(11) **EP 4 818 456 A1**
(43) Date of publication of application: **07.10.2026**
(21) Application number: 25167366.1
(22) Date of filing: 31.03.2025
(51) Int. Cl.: E06B 3/20, E06B 3/96, B29C 65/20, B29C 65/78, B29C 65/00, B29L 31/00

(54) **A METHOD OF PRODUCING A WINDOW PART**

(71) Applicant: VKR Holding A/S, 2970 Hørsholm (DK)
(72) Inventor: Madsen, Jan Kyster, 2970 Hørsholm (DK); Nørgaard, Søren, 2970 Hørsholm (DK); Delic, Saudin, 2970 Hørsholm (DK); Ingvertsen, Finn, 2970 Hørsholm (DK)
(74) Representative: Høiberg P/S

(57) **Abstract**

A method of producing a window part, in particular a window parts for a roof window, such as a window sash or a window frame, is disclosed, which method comprises the steps of providing a plurality of elongated profile bars (1, 2, 13, 14) extruded in a thermoplastic material, and welding the profile bars (1, 2, 13, 14) together to form the window part, wherein each of the profile bars (1, 2, 13, 14) is provided with at least two dedicated welding surfaces, each of which is configured to be welded together with a corresponding dedicated welding surface of another profile bar (1, 2, 13, 14), and wherein each of the profile bars (1, 2, 13, 14) is provided with one or more profile bar fixation features (7), each of which is configured to engage with a corresponding tool fixation feature (8) of a fixation tools, such as a welding fixation tool (5, 6), a drilling fixation tool, and/or a cutting fixation tool, for fixating the profile bar (1, 2, 13, 14) in its longitudinal direction with relation to the respective fixation tool. Furthermore, a window part produced using such a method is disclosed.

## Description

### Field of the disclosure

The present disclosure relates to a method of producing a window part, such as a window sash or a window frame, in particular a window part for a roof window, which window part comprises a plurality of elongated profile bars extruded in a thermoplastic material.

### Background of the disclosure

Window parts, in particular window parts for roof windows, such as window sashes and window frames, which are made from thermoplastic materials, such as polyvinyl chloride (PVC) or similar, are widely used due to their durability, thermal insulation properties, and resistance to environmental factors such as moisture and UV radiation. A common method for manufacturing such window parts involves cutting four profile bars to the required lengths and then welding them together at their ends to form a rectangular sash or frame. To achieve a strong and aesthetically pleasing joint, the ends of the profile bars are typically cut at an angle of 45°, so that two adjoining bars form a mitered joint at each corner of the rectangle.

The welding process typically involves heating the end planes of the adjoining profile bars, pressing them against one another, and allowing the molten material to fuse, thereby forming a continuous bond.

While this method offers several advantages, including a seamless joint appearance and high production efficiency, it also presents certain challenges. One significant issue is the risk of obtaining one or more weaker corners in the finished window part due to variations in the welding pressure applied at each joint. The quality and strength of the welded joint depend on the pressure, with which the two end planes are pressed together during the welding process. If the pressure differs from one corner to another, some joints may be stronger and more durable, while others may be comparatively weaker.

Such non-uniformity can result in structural weaknesses of the window part, leading to potential failures in the long term, especially under mechanical stress or temperature fluctuations. Additionally, improper pressure distribution can cause offset or skewed welding resulting, in turn, in misalignments or even gaps at the joints, affecting the assembly procedure, the mechanical integrity, and the aesthetic quality of the window, of which the window part forms part.

Variations in welding pressure may be influenced by several factors, such as inconsistencies in machine calibration or minor dimensional variations in the profile bars. These factors can make it difficult to achieve consistently strong and reliable joints across all four corners of the window part. As a result, manufacturers often need to implement additional quality control measures to identify and mitigate weak joints, which can increase production costs and reduce overall efficiency.

Another challenge associated with conventional methods known in the art is ensuring the correct alignment of hardware components, such as hinges and handles in the final window assembly comprising welded window parts. For optimising the production with respect to cost, speed and efficiency, such hardware components are advantageously mounted to the respective profile bars in the inline part of the production process, i.e. shortly after the extrusion of the profile and before the profile is cut into bars and welded together to form the desired window part.

During the welding process, some of the thermoplastic material of the profile bars melts, potentially resulting in a reduction in their length. If the welding is not absolute symmetrical, and/or if the amount of material melted varies between the corners of the window part, misalignment issues may arise. For instance, if two hinges are (correctly) pre-mounted on opposite sides of a window frame, any asymmetry in the welding process may cause them to shift so that they are no longer located in the same distance from the corners of the window frame. Consequently, when the window is assembled, the window sash and the window frame are no longer parallel to each other. This is not only an aesthetic concern, but can also impede or even prevent proper assembly of the window. Especially in roof windows, such misalignments may be challenging, because they can be very hard to correct.

A typical solution to such problems is the use of adjustable hinge components, which must be either be installed or at least adjusted after the welding of the window part.

### Brief description of the disclosure

It is a purpose of the present disclosure to provide an improved method for producing window parts, in particular window parts for roof windows, from elongated profile bars extruded in a thermoplastic material, which method overcomes the above-mentioned disadvantages of the methods known in the art by ensuring uniform joint strength across all corners of the window part, thereby enhancing the durability and structural integrity of the final product.

Thus, in a first aspect of the present disclosure, it relates to a method of producing a window part, in particular a window parts for a roof window, such as a window sash or a window frame, which method comprises the steps of providing a plurality of elongated profile bars extruded in a thermoplastic material, and welding the profile bars together to form the window part, wherein each of the profile bars is provided with at least two dedicated welding surfaces, each of which is configured to be welded together with a corresponding dedicated welding surface of another profile bar, and wherein each of the profile bars is provided with one or more profile bar fixation features, each of which is configured to engage with a corresponding tool fixation feature of a fixation tools, such as a welding fixation tool, a drilling fixation tool, and/or a cutting fixation tool, for fixating the profile bar in its longitudinal direction with relation to the respective fixation tool.

Providing each profile bar with one or more profile bar fixation features configured to engage with corresponding tool fixation features of different fixation tools makes it easier to handle and position the profile bars accurately, whereby a more uniform and repeatable production process can be obtained.

It should be noted that, since welding can be performed in many ways including, for instance, laser welding, induction welding, heat welding, ultrasound welding, and vibration welding, the term "welding" as used in the present disclosure is to be interpreted in a broad sense covering all these different types of welding.

Preferably, one or both of the two opposing ends of each of the profile bars is formed with a straight end plane constituting a dedicated welding surface of the profile bar.

Welding surfaces consisting of straight planes facilitates the welding process and significantly increases the probability of obtaining a uniform, symmetric and strong welding.

The straight end plane may form an angle, such as an angle of 15°, 30°, 45°, 60°, 75°, or 90°, with the longitudinal direction of the profile bar.

In order to obtain aesthetically desirable window parts, making sure that each welding is angled at such angles compared to the longitudinal directions of the profile bars is often useful.

In an embodiment of the disclosure, the plurality of elongated profile bars comprises two side bars, a top bar, and a bottom bar for a rectangular window sash or a rectangular window frame.

Although windows of a variety of shapes can be made, rectangular windows are by far the most common.

Both of the opposing ends of each of the two side bars, the top bar, and the bottom bar may be formed with a straight end plane, which forms an angle of 45° to the longitudinal direction of the profile bar, the two end planes of a given profile bar being perpendicular to each other.

Especially for rectangular windows, an often preferred aesthetical solution is obtained by making each welding form an angle of 45° with the longitudinal direction of the two profile bars it connects.

In an embodiment of the disclosure, in the step of welding the profile bars together, the profile bars are welded together two-by-two to form a, preferably rectangular, window sash or window frame, the welding of each profile bar to another profile bar forming a corner of the window sash or the window frame, respectively.

Rectangular window parts being welded together in the four corners thereof are by far the most common shape of window parts being used worldwide.

In an embodiment of the disclosure, the step of welding the profile bars together, for each welding of two profile bars together, comprises the steps of fixating the two relevant profile bars to a first welding fixation tool and a second welding fixation tool, respectively, by engagement of the respective profile bar fixation features and tool fixation features to each other, and pressing the welding surfaces against each other by means of displacing at least one of the first welding fixation tool and the second welding fixation tool.

By using welding fixation tools, by which the two frame profile bars are fixated, to press the two end planes of the frame profile bars, which are to be welded together, against each other, it is possible to control both the positions of the frame profile bars and the pressure, with which they are pressed against each other, with a high accuracy. This means that the conditions, under which the material of the two end planes fuses together, can be optimised, and that a uniform and high quality of the welding of all window frame corner can be obtained.

Preferably, the welding process used is heat welding and, before the step of pressing the welding surfaces against each other, both of the dedicated welding surfaces to be welded together are heated.

In heat welding, a part of the material of both parts to be welded together is melted, and the molten material of the two parts fuses together when cooling down again.

Preferably, in the step of heating both of the dedicated welding surfaces, the two dedicated welding surfaces are both pressed against a heated surface by means of displacing both the first welding fixation tool and the second welding fixation tool.

Heating the welding surfaces by pressing them both against a heated surface, which will typically not be the same surface for both dedicated welding surfaces but can, for instance, be opposite surfaces of the same heated element, is an easy and reliable method for obtaining a controlled and uniform heating of the dedicated welding surfaces and partly melting of the material thereof.

Preferably, the profile bar fixation feature of each profile bar, which is closest to the dedicated welding surface to be used for the welding, is used for fixating the profile bar to the respective first or second welding fixation tool.

All other things alike, the best fixation is obtained by using a fixation point as close as possible to the position, at which the position of the fixed item must be controlled.

Each of the profile bars may be provided with two profile bar fixation features, one of which profile bar fixation features is closer to a first dedicated welding surface of the profile bar than to another dedicated welding surface thereof, and the other one of which profile bar fixation features is closer to the other dedicated welding surface of the profile bar than to the first dedicated welding surface thereof.

By providing each profile bar with two profile bar fixation features, which are preferably located near the two welding surfaces of the profile bar, respectively, it is obtained that the welding fixation tools can engage with the profile bar near its dedicated welding surfaces, which increases the possibility of adjusting the position of the respective dedicated welding surface and the pressure applied thereto very precisely.

In an embodiment of the disclosure, four profile bars are welded together to form a rectangular window part, where each of the four profile bars are fixated to a welding fixation tool near one end of the profile bar during the welding in such a way that, in one corner of the rectangle both profile bars are fixated, in the opposite corner none of the two profile bars are fixated, and in the two remaining corners of the rectangle one of the two profile bars is fixated.

The stiffness of the profile bars ensures that, if he position of one end of the profile bar is fixates, the position of the other end of the profile bar will also be given. Arranging the fixation of the four profile bars as described ensures that at least one end of each of the profile bars will be fixated against a fixated end of another profile bar.

In an embodiment of the disclosure, the step of providing the plurality of elongated profile bars comprises the steps of extruding one or more lengths of profile in a thermoplastic material, and for each of the profile bars to be provided, choosing the one of the one or more lengths of extruded profile, from which the respective profile bar is to be made, providing the chosen length of profile with the one or more profile bar fixation features for the respective profile bar at predetermined positions, fixating the chosen length of profile to a first cutting fixation tool by engagement of a profile bar fixation feature for the respective profile bar and a tool fixation feature of the first cutting fixation tool to each other, moving the fixated length of profile into position with respect to a first cutting tool by means of displacing the first cutting fixation tool, cutting the fixated length of profile with a first straight cut by means of the first cutting tool, thereby forming a first straight end plane of the respective profile bar, fixating the same length of profile to a second cutting fixation tool by engagement of the same or another profile bar fixation feature for the respective profile bar and a tool fixation feature of the second cutting fixation tool to each other, moving the fixated length of profile into position with respect to a second cutting tool by means of displacing the second cutting fixation tool, and cutting the fixated length of profile with a second straight cut by means of the second cutting tool, thereby forming a second straight end plane of the respective profile bar.

This is a simple and reliable way of obtaining precise and accurate dimensions of the profile bars.

The first cutting tool and the second cutting tool may include a rotating circular saw blade or a heated knife for performing a separating cut and a finishing tool for subsequent finishing of the end plane formed by the circular saw blade.

The combined use of a rotating circular saw for performing the cut and, subsequently, a finishing tool for removing any burrs and other irregularities ensures that a very precise and sharp edge can be obtained.

The second cutting fixation tool may be the same as the first cutting fixation tool and/or the second cutting tool is the same as the first cutting tool.

Depending on the size of the cutting apparatus, it may be advantageous to use the same cutting tool for making all cuts, although it may require that the cutting tool is rotated between the cutting of the two ends of the same profile bar.

In an embodiment of the disclosure, the step of providing the chosen length of profile with the one or more profile bar fixation features comprises the steps of fixating the chosen length of profile, and displacing a fixation feature forming tool with respect to the fixated length of profile, the fixation feature forming tool being configured to form the one or more profile bar fixation features, preferably simultaneously, and, if there is more than one profile bar fixation feature to be provided, with a predefined mutual distance depending on the profile bar to be formed.

Forming the one or more profile bar fixation features this way facilitates a very precise positioning of the profile bar fixation feature(s). Forming two or more profile bar fixation features simultaneously with a predefined mutual distance increases this advantage even further.

Preferably, the fixation feature forming tool comprises one or more drills and/or one or more milling cutters.

In most cases, the profile bar fixation feature will consist of or at least comprise a hole or a recess, which is typically made by use of such tools.

In an embodiment of the disclosure, between the step of choosing the one of the one or more lengths of extruded profile and the step of fixating the chosen length of profile to a first cutting fixation tool, the method further comprises the step of drilling or milling out holes and/or recesses in the chosen length of extruded profile at predetermined positions for the mounting of hinges, handles, and other parts, which are to be connected to the respective profile bar when the window part being produced is finished.

In order to reduce costs and production complexity, it is advantageous to perform as many of the production steps while the different parts thereof are still in the in-line part of the production, i.e. before the profile bars are cut from each other and must be handled individually.

In an embodiment of the disclosure, at least some, preferably all, of the holes and/or recesses are made simultaneously with and, preferably, by the same tool, which is used for making the profile bar fixation feature(s) of the respective profile bar.

Thereby it can be assured that the relative positioning of the profile bar fixation feature(s) and the holes and/or recesses as well as the mutual distances there between are precisely as desired.

In an embodiment of the disclosure, the method further comprises, before the step of fixating the chosen length of profile to a first cutting fixation, a step of mounting at least a part of, preferably all, the hinges, handles, and other parts, which are to be connected to the respective profile bar, within the holes and/or recesses made for that purpose.

In order to reduce costs and production complexity, it is advantageous to perform as many of the production steps while the different parts thereof are still in the in-line part of the production, i.e. before the profile bars are cut from each other and must be handled individually.

Preferably, the profile extruded in a thermoplastic material comprises an external wall and one or more internal cavities.

Profile bars comprising an external wall and one or more internal cavities can be produced with a relatively high strength-weight ratio.

Each of the one or more profile bar fixation features may comprise a through-hole extending through an external wall of the profile bar.

If a profile bar fixation feature comprises a through-hole, it means that the full thickness of the external wall of the profile bar can be used for stabilising and strengthening the engagement with a corresponding tool fixation feature of a fixation tool.

In an embodiment of the disclosure, each of the one or more profile bar fixation features comprises a recess in the outer surface of an external wall of the profile bar.

By letting the profile bar fixation features consist of recesses in outer surfaces rather than in holes extending all the way through outer walls of the profile bars, it is avoided that moisture enters the interior of the profile bars through these profile bar fixation features.

In an embodiment of the disclosure, the maximum depth of the recess is between 0.1 mm and (wall thickness minus 0.1 mm), preferably between 0.3 mm and (wall thickness minus 0.3 mm), such as between 0.5 mm and (wall thickness minus 0.5 mm), where "wall thickness" is the thickness of the external wall in which the recess is made at the position at which the recess is made.

Recess depths within these ranges have proven advantageous for obtaining the necessary engagement between the profile bar and the corresponding fixation tool, and at the same time maintaining the necessary stiffness and strength of the profile bar at the position of the profile bar fixation feature.

Each of the one or more profile bar fixation features may comprise a protrusion from the outer surface of an external wall of the profile bar.

In such embodiments, the corresponding tool fixation feature will comprise a hole or a recess configured to engage with the protrusion of the profile bar fixation feature.

Preferably, the maximum extension of the protrusion in a direction substantially perpendicular to the surface of the external wall, from which the protrusion protrudes, is between 0.1 mm and 3 cm, preferably between 0.3 mm and 2 cm, such as between 0.5 mm and 1 cm.

Protrusion heights within these ranges have proven advantageous for obtaining the necessary engagement between the profile bar and the corresponding fixation tool.

Preferably, the shortest distance from a given dedicated welding surface of a profile bar to the nearest edge of the profile bar fixation feature closest thereto is less than 50 cm, preferably less than 30 cm, such as less than 10 cm.

It has turned out that the best and most precise results can be obtained, if the distance between the dedicated welding surface and the profile bar fixation feature engaged with a tool fixation feature of a fixation tool is within these ranges.

The largest dimension of each of the one or more profile bar fixation features measured parallelly to the outer surface of the profile bar may be between 2 mm and 20 mm, preferably between 3 mm and 10 mm, such as between 4 mm and 8 mm.

It has turned out that profile bar fixation features with dimensions within these ranges ensure the best and most precise engagement with corresponding tool fixation features of fixation tools.

Preferably, the outline of each of the one or more profile bar fixation features is shaped as a circle, an obround, a square, a rectangle, a hexagon or another polygon.

It has turned out that profile bar fixation features with such outline shapes ensure a stable and strong engagement with a corresponding tool fixation feature of a fixation tools.

Preferably, the one or more profile bar fixation features are placed at positions on the surface of the profile bar, which will be covered, for instance by flexible sealing strips, when the window comprising the window part being produced is fully assembled and in use.

Making sure that the one or more profile bar fixation features are covered, when the window part is in use is aesthetically pleasing, and it ensures that water and moisture **do** not enter an internal cavity within the profile bar, from which it can be very difficult to remove again.

In an embodiment of the disclosure, the profile bars are extruded from polyvinylchloride (PVC), such as CPVC (chlorinated PVC), uPVC (unplasticized PVC), rPVC (recycled PVC) or mixtures thereof, or a similar thermoplastic material, such as polypropylene (PP).

PVC is a highly durable and weather-resistant material, which does not need any painting or staining and requires only a low amount of maintenance.

In a second aspect of the disclosure, it relates to a window part, in particular a window parts for a roof window, such as a window sash or a window frame, which window part is produced using the method described above.

In a third aspect of the disclosures, it relates to a roof window comprising one or more window parts produced using the method described above.

### The drawings

In the following, a few embodiments of the disclosure are described in more detail with reference to the drawings, of which
- Figs. 1a-1d: schematically illustrate a welding process for a window corner according to a method known in the art,
- Figs. 2a-2d: schematically illustrate a welding process for a window corner according to the present disclosure,
- Fig. 3: schematically illustrates another possible result of a welding process according to the present disclosure,
- Fig. 4: schematically illustrates yet another possible result of a welding process according to the present disclosure,
- Figs. 5a-5c: schematically illustrate three further possible results, respectively, of a welding process according to the present disclosure,
- Figs. 6a-6c: schematically illustrate three different shapes of profile bar fixation features of profile bars according to the present disclosure,
- Figs. 7a-7c: schematically illustrate three different shapes of tool fixation features of welding fixation tools according to the present disclosure,
- Fig. 8: schematically illustrates the coupling between a profile bar and a fixation tool according to an embodiment of the present disclosure,
- Fig. 9: schematically illustrates the coupling between a profile bar and a fixation tool according to another embodiment of the present disclosure,
- Figs. 10a-10b: schematically illustrate a cross-section of a symmetric and an asymmetric welding, respectively,
- Fig. 11: schematically illustrates the a preferred principle of welding four profile bars together according to an embodiment of the disclosure,
- Fig. 12: schematically illustrates a window corner, which is welded using a method according to the present disclosure, and
- Fig. 13: schematically illustrates two extruded lengths of profile produced according to an embodiment of the present disclosure.

### Detailed description

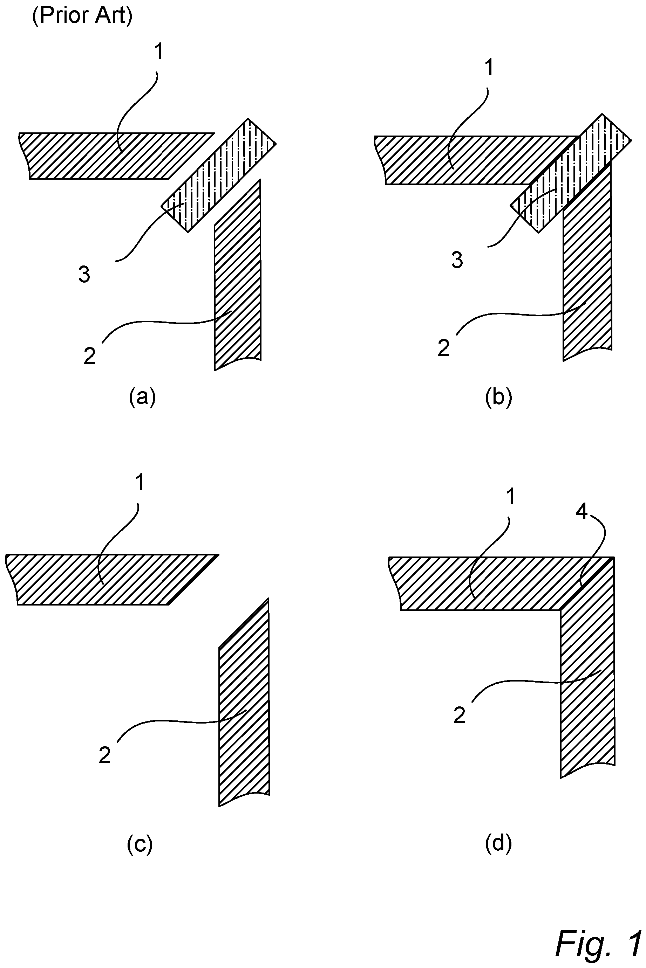

Figs. 1a-1d schematically illustrate a typical welding process for a window corner 15 according to a method known in the art. Fig. 1a shows two ends of a first profile bar 1 and a second profile bar 2, respectively, which are to be welded together, along with a heating element 3.

Fig. 1b shows how both of the end planes to be welded together are pressed against opposing surfaces of the heating element 3 so that the material of the two end planes is heated and partly melts.

In Fig. 1c it is schematically shown how the two profile bars 1, 2 are retracted from the heating element 3 when the heating is completed, and the heating element 3 is removed, before, as shown in Fig. 1d, the two partly molten end planes are pressed against each other to be welded together as the molten material of the two end planes fuses together and solidifies to form a welding 4 holding the two profile bars 1, 2 together.

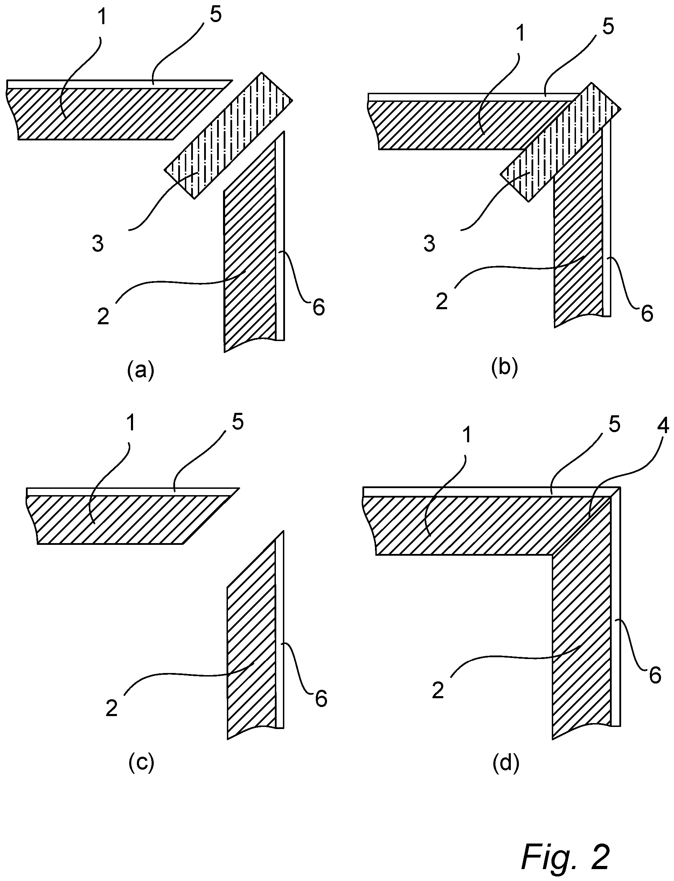

Figs. 2a-2d schematically illustrate a welding process for a window corner 15 according to the present disclosure. The main difference from the traditional process illustrated in Figs. 1a-1d is that, in the present disclosure a first welding fixation tool 5 and a second welding fixation tool 6 are engaged with the first profile bar 1 and the second profile bar 2, respectively, during the whole welding process. This means that, by controlling the displacements of the first welding fixation tool 5 and the second welding fixation tool 6 a very precise positioning of the first profile bar 1 and the second profile bar 2 can be obtained. Also, the pressure with which the two profile bars 1, 2 are pressed against each other in the fusing part of the process shown in Fig. 2d can be controlled very precisely.

Thus, the welding conditions can be optimised and the strongest possible and very accurate welding 4 can be obtained in each of the window corners 15. The well-known problem of traditional welding processes related to one or more window corners 15 being weaker than the others can therefore be avoided.

Production of window parts of the present type are typically performed by means of machinery, in which the welding process illustrated schematically in Figs. 1a-1d is performed simultaneously for all four corners 15 of the window part. The same will typically be the case if a welding process according to the present disclosure as illustrated schematically in Figs. 2a-2d is used.

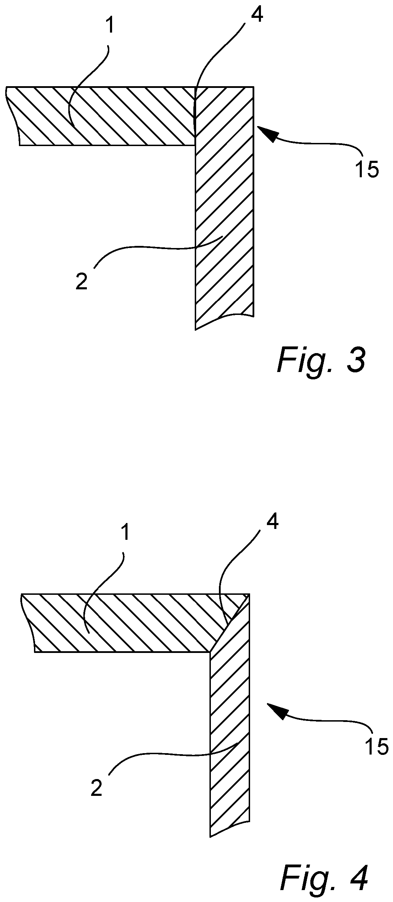

Fig. 3 schematically illustrates another possible result of a welding process according to the present disclosure, in which a window corner 15 is formed by welding an end plane of a first profile bar 1 together with a part of the side of a second profile bar 2. Thus, in this embodiment the welding 4 extends in a direction, which is perpendicular to the longitudinal axis of the first profile bar 1 and parallel to the longitudinal axis of the second profile bar 2.

Fig. 4 schematically illustrates yet another possible result of a welding process according to the present disclosure. In this embodiment the width of the first profile bar 1 is larger than the width of the second profile bar 2. Like in the embodiment shown in Fig. 2d, the welding 4 extends in a direction, which is angled with respect to the longitudinal axes of the profile bars 1, 2. However, in the embodiment shown in Fig. 4, the angle with the longitudinal direction of the first profile bar 1 is larger than 45°, and the angle with the longitudinal direction of the second profile bar 2 is smaller than 45°,

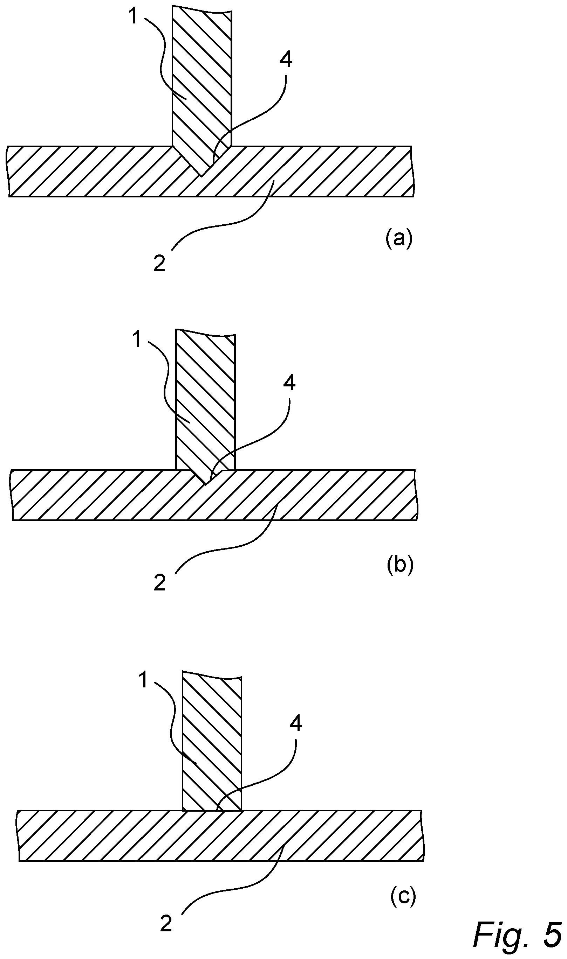

Figs. 5a-5c schematically illustrate three further possible results, respectively, of a welding process according to the present disclosure. As illustrated, the method is not only suitable for making window corners, but can also be used for making other connections between two profile bars 1, 2. In each of the three embodiments shown in Figs. 5a, 5b, and 5c, respectively, a welding 4 connects an end plane of a first profile bar 1 to a part of the side of a second profile bar 2, forming a T-junction.

In Fig. 5a, the end plane of the first profile bar 1 is tapered to form a pointed wedge, and a corresponding groove is formed in the side of the second profile bar 2 to accommodate this wedge. It must, of course, be ensured that the groove made in the second profile bar 2 is not so deep that the strength of the profile bar 2 is significantly reduced, but the physical engagement of the one profile bar 1 with the other 2 combined with a relative long welding 4 ensures that a really strong connection between the two profile bars 1, 2 can be obtained.

In the embodiment shown in Fig. 5b, the end plane of the first profile bar 1 is not formed as a pointed wedge, but it is formed to comprise a centrally positioned pointed wedge. A groove corresponding to the shape and size of this wedge is formed in the side of the second profile bar 2 for accommodating the wedge. This embodiment involves more work than the one shown in Fig. 5a in shaping the end plate of the first profile bar 1. The advantage gained is that the wedge to be formed in the second profile bar 2 is smaller and that therefore, the strength of the second profile bar 2 is decreased less than in the embodiment shown in Fig. 5a.

If the strength of the connection between the two profile bars 1, 2 is not a critical parameter, the welding can be performing using an easier process than the ones needed for obtaining the embodiments shown in Figs. 5a and 5b. Thus, in the embodiment shown in Fig. 5c, a plane end plane of the first profile bar 1 is simply welded together with a part of the side of a second profile bar 2. Like in the window corner 15 shown in Fig. 3, this means that the welding 4 extends in a direction, which is perpendicular to the longitudinal axis of the first profile bar 1 and parallel to the longitudinal axis of the second profile bar 2.

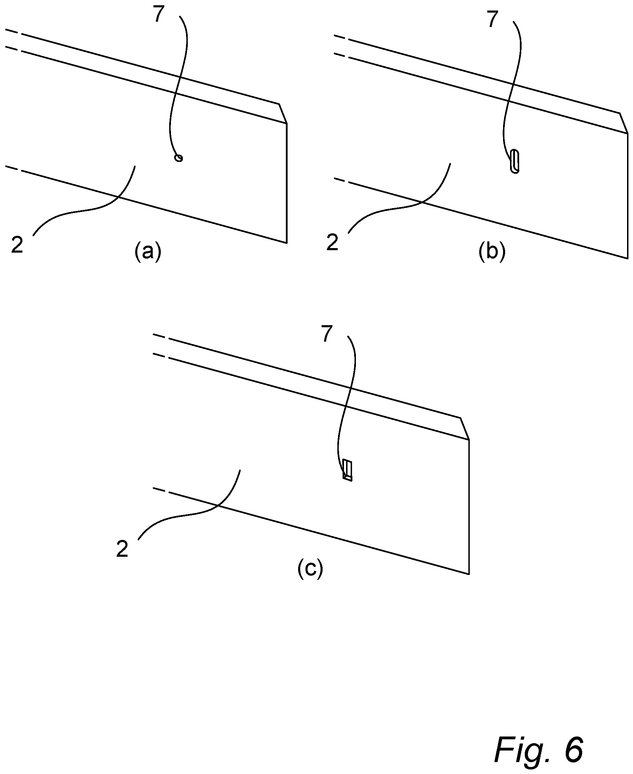

Figs. 6a-6c schematically illustrate three different shapes of a profile bar fixation feature 7 of a profile bar 2 according to the present disclosure. As indicated, the profile bar fixation feature 7 can be formed as a hole or a recess in an outer surface of an external wall of the profile bar 2, which hole or recess is located relatively close to an end plane of the profile bar 2. In the shown examples, this end plane is angled at 45° with respect to the transversal directions of the profile bar 2. The profile bar fixation feature 7 is shown to be placed at the side of the profile bar 2, which will form an outer side of the window part after the production thereof. In principle, the profile bar fixation feature 7 can also be located at other sides of the profile bar 2, but placing it on the side as illustrated enables a stable connection between the welding fixation tool (not shown in Figs. 6a-6c) and the profile bar 2. Furthermore, this is also typically the side of the profile bar 2, at which flexible sealing strips, which can be used for covering the profile bar fixation feature 7 when the window part is fully assembled and in use, will be placed.

The profile bar fixation feature 7 can have a variety of different outline shapes exemplified by the round, obround, and rectangular shapes shown in Figs. 6a, 6b, and 6b, respectively.

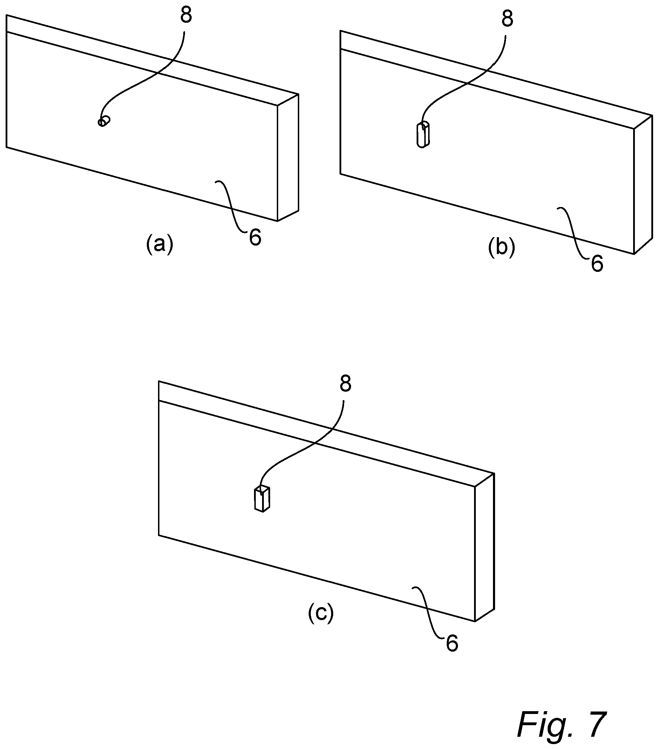

Figs. 7a-7c schematically illustrate three different shapes of a tool fixation feature 8 of welding fixation tool 6 according to the present disclosure. As indicated, the tool fixation feature 8 can be formed as a protrusion located on the inside of the welding fixation tool 6 at a distance from the angled end planes thereof corresponding to the distance between the profile bar fixation feature 7 and the end plane of the profile bar 2 shown in Figs. 6a-6c. Having outline shapes, which are round, obround, and rectangular, respectively, the welding fixation tools 6 shown in Figs. 7a, 7b, and 7c are therefore configured to be able to engage with the profile bars 2 shown in Figs. 6a, 6b, and 6c, respectively.

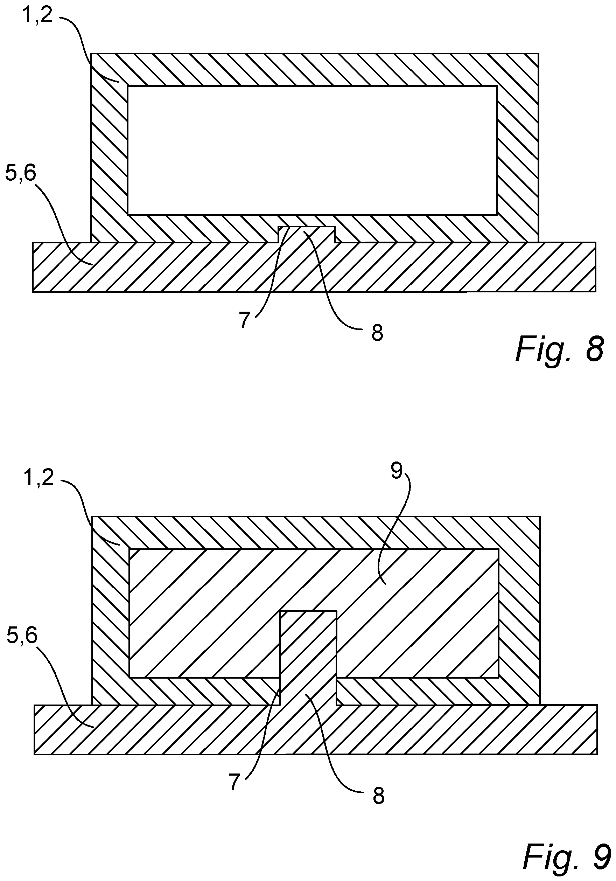

Fig. 8 schematically illustrates the coupling between a profile bar 1, 2 and a fixation tool according to an embodiment of the present disclosure. In the shown embodiment, the profile bar fixation feature 7 is formed as a recess in an outer surface of an external wall of the profile bar 1, 2. Correspondingly, the tool fixation feature 8 of the fixation tool, exemplified as a welding fixation tool 5, 6, is formed as a protrusion fitting perfectly into that recess. The relatively sharp edges of the profile bar fixation feature 7 and the tool fixation feature 8, respectively, ensures a stable and precise engagement between the profile bar 1, 2 and the fixation tool. The fact that the profile bar fixation feature 7 consist of a recess rather than in a hole extending all the way through the outer wall of the profile bar 1, 2, means that no moisture can enter the interior of the profile bar 1, 2 through the profile bar fixation feature 7.

Fig. 9 schematically illustrates the coupling between a profile bar 1, 2 and a fixation tool according to another embodiment of the present disclosure. In this embodiment, the interior of the profile bar 1, 2 is filled with a foam, preferably of the same thermoplastic material as the profile bar 1, 2 itself. The profile bar fixation feature 7 is formed as a hole extending through an outer surface of an external wall of the profile bar 1, 2 and continuing some distance into the foam 9 within the profile bar 1, 2. The tool fixation feature 8 of the fixation tool, also here exemplified as a welding fixation tool 5, 6, is formed as a protrusion with a cross-section fitting perfectly through that hole. Again, the relatively sharp edges of the profile bar fixation feature 7 and the tool fixation feature 8, respectively, ensures a stable and precise engagement between the profile bar 1, 2 and the fixation tool. Furthermore, the fact that the tool fixation feature 8 continues all the way through the external wall of the profile bar 1, 2 and further into the foam 9 means that the full thickness of the external wall of the profile bar 1, 2 can be used for stabilising and strengthening the engagement between the profile bar 1, 2 and the fixation tool. The interior of the profile bar 1, 2 being filled with foam 9 ensures that no moisture will be collected within the profile bar 1, 2, although there is a hole through the outer wall thereof.

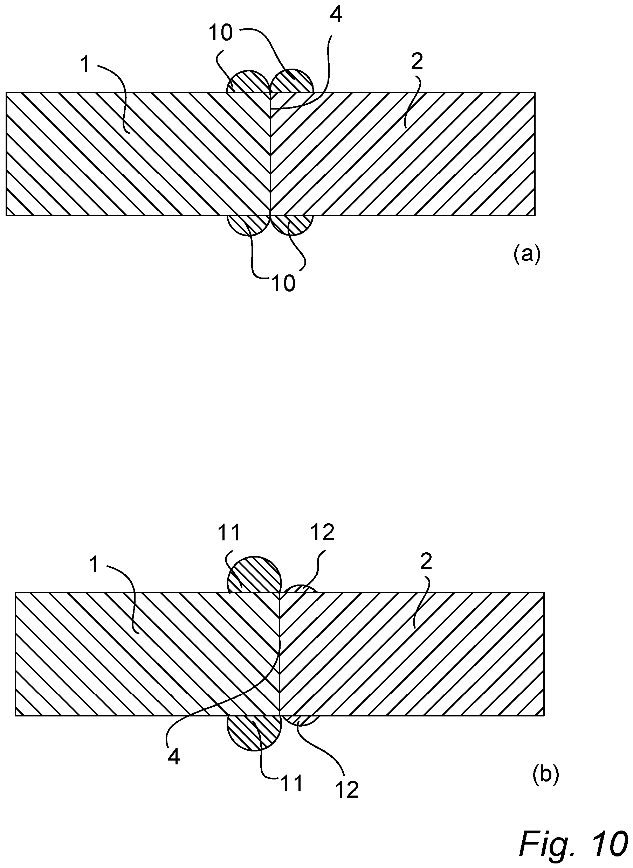

The weld seam 10 formed while performing heat welding is typically formed as two beads of molten and hardened material as indicated in Figs. 10a-10b, which schematically illustrate a cross-section of a symmetric and an asymmetric welding, respectively. In both cases, a first profile bar 1 and a second profile bar 2 are connected by a welding 4, along the edges of which is formed two beads of material comprising predominantly molten and hardened material from the first profile bar 1 and the second profile bar, respectively.

In the welding 4 shown in Fig. 10a, the two beads of the weld seam 10 are similar in size, indicating that the welding 4 has been performed symmetrically, the heating of the welding surfaces of the two profile bars 1, 2 as well as the pressure applied to each of the welding surfaces during the welding process being identical or at least close to identical. Thus, substantially the same amount of material have been molten and pressed away from both of the profile bars 1, 2.

In the welding 4 illustrated in Fig. 10b, however, it is clear that the bead 11 predominantly comprising material from the first profile bar 1 is significantly larger than the bead 12 predominantly comprising material from the second profile bar 2. This indicates that, during the welding process, the welding surface of the first profile bar 1 has been exposed to more heat and/or a higher pressure than its counterpart on the second profile bar 2.

As for the welding 4 itself, an asymmetrical welding 4 like the one illustrated in Fig. 10b may be as strong as the symmetrical one illustrated in Fig. 10a. Also, the different dimensions of the beads 11, 12 is no problem, because these beads 11, 12 will be removed anyway by a suitable finishing tool. However, the excess heat, to which the welding surface of the first profile bar 1 in Fig. 10b may have been exposed, can cause not only miscolouring but also a weakening of the strength of the material of the first profile bar 1 in the area close to the welding 4. Thus, although the welding 4 may be strong enough, the risk of the window part breaking next to the welding 4 may be increased in the case of a significantly asymmetrical welding 4. Therefore, it is one of the significant advantages of the present disclosure that the use of welding fixation tools 5, 6 as described ensures that a symmetrical and uniform welding can be obtained throughout the window part being produced with this method.

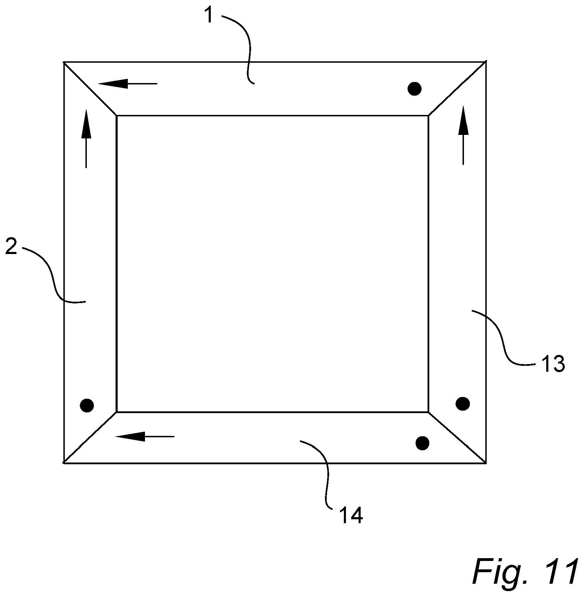

Fig. 11 schematically illustrates a preferred principle of welding four profile bars 1, 2, 13, 14 together to form a rectangular window part according to an embodiment of the disclosure. During the welding process, each of the four profile bars 1, 2, 13, 14 are fixated to a welding fixation tool (not shown in Fig. 11) near one end of the profile bar 1, 2, 13, 14, which is indicated by an arrow in the figure. At the other end of the profile bar 1, 2, 13, 14 (marked by a dot in the figure), no welding fixation tool is used.

The four welding fixation tools are arranged in such a way that, in one corner of the rectangle both profile bars 1, 2 are fixated, in the opposite corner none of the two profile bars 13, 14 are fixated, and in the two remaining corners of the rectangle one of the two profile bars 13, 14 is fixated.

As explained above, arranging the fixation of the four profile bars this way ensures that at least one end of each of the profile bars will be fixated against a fixated end of another profile bar.

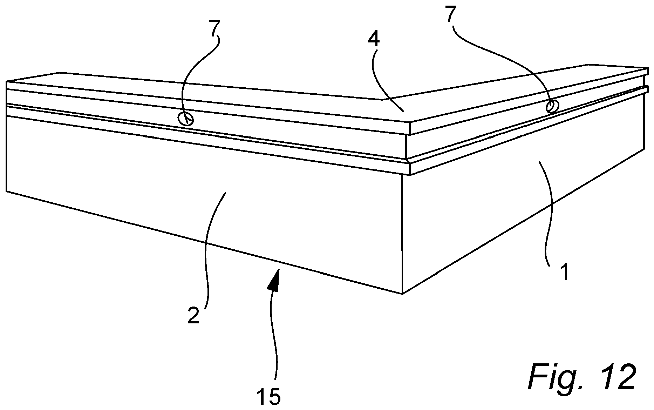

Fig. 12 schematically illustrates a window corner 15, which is welded using a method according to the present disclosure. It is shown how the profile bar fixation features 7 of the first profile bar 1 and the second profile bar 2 are both located on the outer side of the window part within a longitudinal groove, in which a flexible sealing strip (not shown) can later be mounted. The welding 4 connecting the two profile bars 1, 2 to form the corner 15 is not visible in Fig. 12, because the weld seam, which were the result of the fusing of the material of the end planes of the profile bars 1, 2, has been removed by a suitable finishing tool.

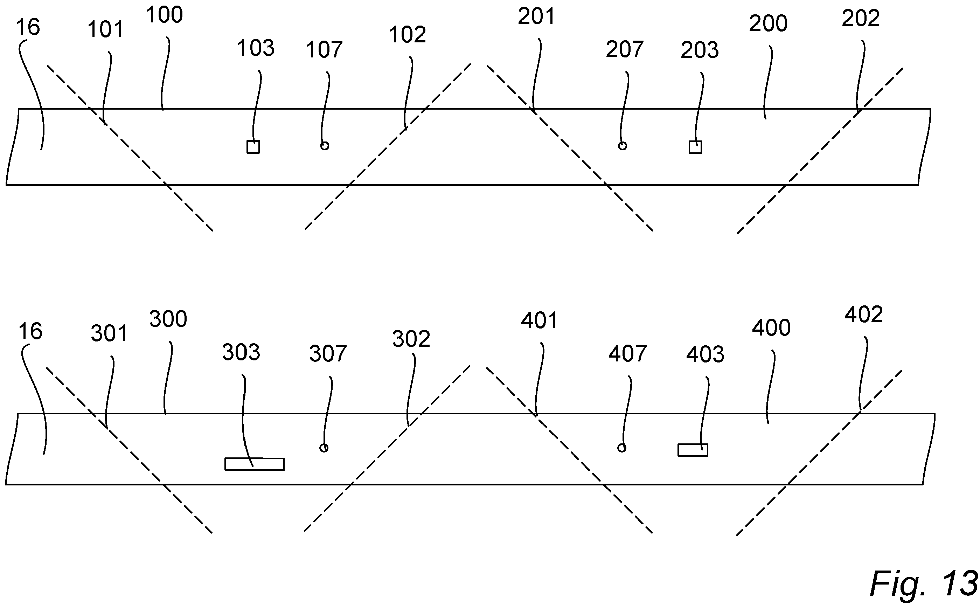

Fig. 13 schematically illustrates two extruded lengths of profile 16 produced according to an embodiment of the present disclosure. Two profile bars 100, 200; 300, 400 are to be made from each of these lengths of profile 16. It is to be noted that, in other embodiments, a high number of profile bars will be made from one and the same length of profile 16. Due to the fact that most window parts use profile bars with different cross-sections for the top, the sides and the bottom, respectively, the four profile bars of a rectangular window part will most likely be made from different lengths of profile 16.

Also, it is to be noted that the figure is relatively far from being to scale. Thus, in most cases, the length of each of the profile bars to be made 100, 200, 300, 400 will be significantly larger than the width thereof.

For each of the four profile bars to be made 100, 200, 300, 400, dotted lines mark the physical limitations of the respective profile bar to be made 100, 200, 300, 400 indicated by a first cut 101, 201, 301, 401 and a second cut 102, 202, 302, 402 to be performed. It may seem to cause an unnecessary waste of material that every second profile bar to be made 100, 200, 300, 400 is not rotated by 180° so that to neighbouring profile bars to be made 100, 200, 300, 400 could be separated from each other by two parallel cuts close to each other. This would, however, only be possible if the cross-section of the length of profile 16 were symmetrical, which is rarely, if ever, the case.

In Fig. 13, each of the profile bars to be made 100, 200, 300, 400 is provided with a profile bar fixation feature 107, 207, 307, 407. In other embodiments, one or more of the profile bars to be made 100, 200, 300, 400 may be provide with more than this one profile bar fixation feature 107, 207, 307, 407. Also, it is indicated in the figure, how each of the profile bars to be made 100, 200, 300, 400 may comprise one or more holes and/or recesses 103, 203, 303, 403 for mounting of hardware parts (not shown). Whenever possible, such hardware parts, which may include, for instance, hinges, grips and locks, are preferably mounted onto the length(s) of profile 16 before the cuts 101, 102, 201, 202, 301, 302, 401, 402 are performed to divide the length(s) of profile 16 into individual profile bars.

In order to ensure correct and precise positioning and mutual distances between the profile bar fixation features 107, 207, 307, 407 and the corresponding holes and/or recesses 103, 203, 303, 403 for mounting of hardware parts, these are preferably made simultaneously, at least for the individual profile bar to be made 100, 200, 300, 400, and, if possible, using the same drilling or milling tool.

The fact that the cuts 101, 102, 201, 202, 301, 302, 401, 402 are made (later) with a predefined and precise distance to the same respective profile bar fixation features 107, 207, 307, 407 using cutting fixation tools as described elsewhere in the present disclosure ensures that also the positioning and the mutual distances between the holes and/or recesses 103, 203, 303, 403 for mounting of hardware parts on one side and the cuts 101, 102, 201, 202, 301, 302, 401, 402 performed later are correct and precise.

Finally, as also described elsewhere in the present disclosure, the control of the welding may be significantly improved with respect to correct positioning and applied pressure, by using welding fixation tools 5, 6, once again with the same profile bar fixation features 107, 207, 307, 407. This means that a much better resulting positioning of the hardware part mounted onto the profile bars 1, 2, 13, 14 of the produced window part can be obtained.

Thereby, a major problem of window parts produced using methods known in the art has been resolved. To give an example of the problems related to prior art methods, most producers of windows made from extruded profiles of thermoplastic materials use adjustable pivot hinges due to inaccurate positioning of the two opposing mounting points (for instance corresponding to the holes 103 and 203 in Fig. 13) on the two side bars, respectively. With the method of the present disclosure, more cost effective pivot hinges without such an adjustment feature may be used instead, thus reducing the complexity and cost of the window part production.

### List of reference numbers

- 1.: First profile bar
- 2.: Second profile bar
- 3.: Heating element
- 4.: Welding
- 5.: First welding fixation tool
- 6.: Second welding fixation tool
- 7.: Profile bar fixation feature
- 8.: Tool fixation feature
- 9.: Foam inside profile bar
- 10.: Weld seam in symmetric welding
- 11.: Enlarged part of weld seam in asymmetric welding
- 12.: Diminished part of weld seam in asymmetric welding
- 13.: Third profile bar
- 14.: Fourth profile bar
- 15.: Window corner
- 16.: Extruded length of profile

- 100.: First profile bar to be made
- 101.: First profile bar to be made - first cut
- 102.: First profile bar to be made - second cut
- 103.: First profile bar to be made - hole/recess for mounting of hardware part
- 107.: First profile bar to be made - profile bar fixation feature

- 200.: Second profile bar to be made
- 201.: Second profile bar to be made - first cut
- 202.: Second profile bar to be made - second cut
- 203.: Second profile bar to be made - hole/recess for mounting of hardware part
- 207.: Second profile bar to be made - profile bar fixation feature

- 300.: Third profile bar to be made
- 301.: Third profile bar to be made - first cut
- 302.: Third profile bar to be made - second cut
- 303.: Third profile bar to be made - hole/recess for mounting of hardware part
- 307.: Third profile bar to be made - profile bar fixation feature

- 400.: Fourth profile bar to be made
- 401.: Fourth profile bar to be made - first cut
- 402.: Fourth profile bar to be made - second cut
- 403.: Fourth profile bar to be made - hole/recess for mounting of hardware part
- 407.: Fourth profile bar to be made - profile bar fixation feature

### Embodiments

The scope of the present disclosure is defined by the claims and includes, but is not limited to the following embodiments:
1. A method of producing a window part, in particular a window parts for a roof window, such as a window sash or a window frame, which method comprises the steps of
   - providing a plurality of elongated profile bars (1, 2, 13, 14) extruded in a thermoplastic material, and
   - welding the profile bars (1, 2, 13, 14) together to form the window part,
      wherein each of the profile bars (1, 2, 13, 14) is provided with at least two dedicated welding surfaces, each of which is configured to be welded together with a corresponding dedicated welding surface of another profile bar (1, 2, 13, 14), and
      wherein each of the profile bars (1, 2, 13, 14) is provided with one or more profile bar fixation features (7), each of which is configured to engage with a corresponding tool fixation feature (8) of a fixation tools, such as a welding fixation tool (5, 6), a drilling fixation tool, and/or a cutting fixation tool, for fixating the profile bar (1, 2, 13, 14) in its longitudinal direction with relation to the respective fixation tool.
2. The method according to item 1, wherein one or both of the two opposing ends of each of the profile bars (1, 2, 13, 14) is formed with a straight end plane constituting a dedicated welding surface of the profile bar (1, 2, 13, 14).
3. The method according to item 2, wherein the straight end plane forms an angle, such as an angle of 15°, 30°, 45°, 60°, 75°, or 90°, with the longitudinal direction of the profile bar (1, 2, 13, 14).
4. The method according to any of the preceding items, wherein the plurality of elongated profile bars (1, 2, 13, 14) comprises two side bars, a top bar, and a bottom bar for a rectangular window sash or a rectangular window frame.
5. The method according to item 4, wherein both of the opposing ends of each of the two side bars, the top bar, and the bottom bar are formed with a straight end plane, which forms an angle of 45° to the longitudinal direction of the profile bar (1, 2, 13, 14), the two end planes of a given profile bar (1, 2, 13, 14) being perpendicular to each other.
6. The method according to any of the preceding items, wherein, in the step of welding the profile bars (1, 2, 13, 14) together, the profile bars (1, 2, 13, 14) are welded together two-by-two to form a, preferably rectangular, window sash or window frame, the welding of each profile bar (1, 2, 13, 14) to another profile bar )1, 2, 13, 14) forming a corner (15) of the window sash or the window frame, respectively.
7. The method according to any of the preceding items, wherein the step of welding the profile bars (1, 2, 13, 14) together, for each welding of two profile bars (1, 2, 13, 14) together, comprises the steps of
   - fixating the two relevant profile bars (1, 2, 13, 14) to a first welding fixation tool (5) and a second welding fixation tool (6), respectively, by engagement of the respective profile bar fixation features (7) and tool fixation features (8) to each other, and
   - pressing the welding surfaces against each other by means of displacing at least one of the first welding fixation tool (5) and the second welding fixation tool (6).
8. The method according to item 7, wherein the welding process used is heat welding and, before the step of pressing the welding surfaces against each other, both of the dedicated welding surfaces to be welded together are heated.
9. The method according to item 8, wherein, in the step of heating both of the dedicated welding surfaces, the two dedicated welding surfaces are both pressed against a heated surface by means of displacing both the first welding fixation tool (5) and the second welding fixation tool (6).
10. The method according to any of items 7-9, wherein the profile bar fixation feature (7) of each profile bar (1, 2, 13, 14), which is closest to the dedicated welding surface to be used for the welding, is used for fixating the profile bar (1, 2, 13, 14) to the respective first (5) or second (6) welding fixation tool.
11. The method according to any of the preceding items, wherein each of the profile bars (1, 2, 13, 14) is provided with two profile bar fixation features (7), one of which profile bar fixation features (7) is closer to a first dedicated welding surface of the profile bar (1, 2, 13, 14) than to the other dedicated welding surface thereof, and the other one of which profile bar fixation features (7) is closer to the other dedicated welding surface of the profile bar (1, 2, 13, 14) than to the first dedicated welding surface thereof.
12. The method according to any of the preceding items, wherein four profile bars (1, 2, 13, 14) are welded together to form a rectangular window part, where each of the four profile bars (1, 2, 13, 14) are fixated to a welding fixation tool (5, 6) near one end of the profile bar (1, 2, 13, 14) during the welding in such a way that, in one corner (15) of the rectangle both profile bars (1, 2) are fixated, in the opposite corner (15) none of the two profile bars (13, 14) are fixated, and in the two remaining corners (15) of the rectangle one of the two profile bars (13, 14) is fixated.
13. The method according to any of the preceding items, wherein the step of providing the plurality of elongated profile bars (100, 200, 300, 400) comprises the steps of
   - extruding one or more lengths of profile (16) in a thermoplastic material, and for each of the profile bars (100, 200, 300, 400) to be provided,
   - choosing the one of the one or more lengths of extruded profile (16), from which the respective profile bar (100, 200, 300, 400) is to be made,
   - providing the chosen length of profile (16) with the one or more profile bar fixation features (107, 207, 307, 407) for the respective profile bar (100, 200, 300, 400) at predetermined positions,
   - fixating the chosen length of profile (16) to a first cutting fixation tool by engagement of a profile bar fixation feature (107, 207, 307, 407) for the respective profile bar (100, 200, 300, 400) and a tool fixation feature (8) of the first cutting fixation tool to each other,
   - moving the fixated length of profile (16) into position with respect to a first cutting tool by means of displacing the first cutting fixation tool,
   - cutting the fixated length of profile with a first straight cut (101, 201, 301, 401) by means of the first cutting tool, thereby forming a first straight end plane of the respective profile bar (100, 200, 300, 400),
   - fixating the same length of profile (16) to a second cutting fixation tool by engagement of the same or another profile bar fixation feature (107, 207, 307, 407) for the respective profile bar (100, 200, 300, 400) and a tool fixation feature (8) of the second cutting fixation tool to each other,
   - moving the fixated length of profile (16) into position with respect to a second cutting tool by means of displacing the second cutting fixation tool, and
   - cutting the fixated length of profile (16) with a second straight cut (102, 202, 302, 402) by means of the second cutting tool, thereby forming a second straight end plane of the respective profile bar (100, 200, 300, 400).
14. The method according to item 13, wherein the first cutting tool and the second cutting tool include a rotating circular saw blade or a heated knife for performing a separating cut and a finishing tool for subsequent finishing of the end plane formed by the circular saw blade.
15. The method according to item 13 or 14, wherein the second cutting fixation tool is the same as the first cutting fixation tool and/or the second cutting tool is the same as the first cutting tool.
16. The method according to any of items 13-15, wherein the step of providing the chosen length of profile (16) with the one or more profile bar fixation features (107, 207, 307, 407) comprises the steps of
   - fixating the chosen length of profile (16), and
   - displacing a fixation feature forming tool with respect to the fixated length of profile (16), the fixation feature forming tool being configured to form the one or more profile bar fixation features (107, 207, 307, 407), preferably simultaneously, and, if there is more than one profile bar fixation feature (107, 207, 307, 407) to be provided, with a predefined mutual distance depending on the profile bar (100, 200, 300, 400) to be formed.
17. The method according to item 16, wherein the fixation feature forming tool comprises one or more drills and/or one or more milling cutters.
18. The method according to any of items 13-17, wherein, between the step of choosing the one of the one or more lengths of extruded profile (16) and the step of fixating the chosen length of profile (16) to a first cutting fixation tool, the method further comprises the step of
   - drilling or milling out holes and/or recesses (103, 203, 303, 403) in the chosen length of extruded profile (16) at predetermined positions for the mounting of hinges, handles, and other parts, which are to be connected to the respective profile bar (100, 200, 300, 400) when the window part being produced is finished.
19. The method according to item 18, wherein at least some, preferably all, of the holes and/or recesses (103, 203, 303, 403) are made simultaneously with and, preferably, by the same tool, which is used for making the profile bar fixation feature(s) (107, 207, 307, 407) of the respective profile bar (100, 200, 300, 400).
20. The method according to item 18 or 19, further comprising, before the step of fixating the chosen length of profile (16) to a first cutting fixation, a step of mounting at least a part of, preferably all, the hinges, handles, and other parts, which are to be connected to the respective profile bar (100, 200, 300, 400), within the holes and/or recesses (103, 203, 303, 403) made for that purpose.
21. The method according to any of the preceding items, wherein the profile extruded in a thermoplastic material comprises an external wall and one or more internal cavities.
22. The method according to item 21, wherein each of the one or more profile bar fixation features (7) comprises a through-hole extending through an external wall of the profile bar (1, 2, 13, 14).
23. The method according to any of items 1-21, wherein each of the one or more profile bar fixation features (7) comprises a recess in the outer surface of an external wall of the profile bar (1, 2, 13, 14).
24. The method according to item 23, wherein the maximum depth of the recess is between 0.1 mm and (wall thickness minus 0.1 mm), preferably between 0.3 mm and (wall thickness minus 0.3 mm), such as between 0.5 mm and (wall thickness minus 0.5 mm), where "wall thickness" is the thickness of the external wall in which the recess is made at the position at which the recess is made.
25. The method according to any of items 1-21, wherein each of the one or more profile bar fixation features (7) comprises a protrusion from the outer surface of an external wall of the profile bar (1, 2, 13, 14).
26. The method according to item 25, wherein the maximum extension of the protrusion in a direction substantially perpendicular to the surface of the external wall, from which the protrusion protrudes, is between 0.1 mm and 3 cm, preferably between 0.3 mm and 2 cm, such as between 0.5 mm and 1 cm.
27. The method according to any of the preceding items, wherein the shortest distance from a given dedicated welding surface of a profile bar (1, 2, 13, 14) to the nearest edge of the profile bar fixation feature (7) closest thereto is less than 50 cm, preferably less than 30 cm, such as less than 10 cm.
28. The method according to any of the preceding items, wherein the largest dimension of each of the one or more profile bar fixation features (7) measured parallelly to the outer surface of the profile bar (1, 2, 13, 14) is between 2 mm and 20 mm, preferably between 3 mm and 10 mm, such as between 4 mm and 8 mm.
29. The method according to any of the preceding items, wherein the outline of each of the one or more profile bar fixation features (7) is shaped as a circle, an obround, a square, a rectangle, a hexagon or another polygon.
30. The method according to any of the preceding items, wherein the one or more profile bar fixation features (7) are placed at positions on the surface of the profile bar (1, 2, 13, 14), which will be covered, for instance by flexible sealing strips, when the window comprising the window part being produced is fully assembled and in use.
31. The method according to any of the preceding items, wherein the profile bars (1, 2, 13, 14) are extruded from polyvinylchloride (PVC), such as CPVC (chlorinated PVC), uPVC (unplasticized PVC), rPVC (recycled PVC) or mixtures thereof, or a similar thermoplastic material, such as polypropylene (PP).
32. A window part, in particular a window parts for a roof window, such as a window sash or a window frame, which window part is produced using the method according to any of the preceding items.
33. A roof window comprising one or more window parts produced using the method according to any of items 1-31.

## Claims

1. A method of producing a window part, in particular a window part a for roof window, such as a window sash or a window frame, which method comprises the steps of
- providing a plurality of elongated profile bars (1, 2, 13, 14) extruded in a thermoplastic material, and
- welding the profile bars (1, 2, 13, 14) together to form the window part,
wherein each of the profile bars (1, 2, 13, 14) is provided with at least two dedicated welding surfaces, each of which is configured to be welded together with a corresponding dedicated welding surface of another profile bar (1, 2, 13, 14), and
wherein each of the profile bars (1, 2, 13, 14) is provided with one or more profile bar fixation features (7), each of which is configured to engage with a corresponding tool fixation feature (8) of a fixation tools, such as a welding fixation tool (5, 6), a drilling fixation tool, and/or a cutting fixation tool, for fixating the profile bar (1, 2, 13, 14) in its longitudinal direction with relation to the respective fixation tool.

2. The method according to claim 1, wherein the plurality of elongated profile bars (1, 2, 13, 14) comprises two side bars, a top bar, and a bottom bar for a rectangular window sash or a rectangular window frame.

3. The method according to claim 1 or 2, wherein, in the step of welding the profile bars (1, 2, 13, 14) together, the profile bars (1, 2, 13, 14) are welded together two-by-two to form a, preferably rectangular, window sash or window frame, the welding of each profile bar (1, 2, 13, 14) to another profile bar )1, 2, 13, 14) forming a corner (15) of the window sash or the window frame, respectively.

4. The method according to any of the preceding claims, wherein the step of welding the profile bars (1, 2, 13, 14) together, for each welding of two profile bars (1, 2, 13, 14) together, comprises the steps of
- fixating the two relevant profile bars (1, 2, 13, 14) to a first welding fixation tool (5) and a second welding fixation tool (6), respectively, by engagement of the respective profile bar fixation features (7) and tool fixation features (8) to each other, and
- pressing the welding surfaces against each other by means of displacing at least one of the first welding fixation tool (5) and the second welding fixation tool (6).

5. The method according to any of the preceding claims, wherein four profile bars (1, 2, 13, 14) are welded together to form a rectangular window part, where each of the four profile bars (1, 2, 13, 14) are fixated to a welding fixation tool (5, 6) near one end of the profile bar (1, 2, 13, 14) during the welding in such a way that, in one corner (15) of the rectangle both profile bars (1, 2) are fixated, in the opposite corner (15) none of the two profile bars (13, 14) are fixated, and in the two remaining corners (15) of the rectangle one of the two profile bars (13, 14) is fixated.

6. The method according to any of the preceding claims, wherein the step of providing the plurality of elongated profile bars (100, 200, 300, 400) comprises the steps of
- extruding one or more lengths of profile (16) in a thermoplastic material, and for each of the profile bars (100, 200, 300, 400) to be provided,
- choosing the one of the one or more lengths of extruded profile (16), from which the respective profile bar (100, 200, 300, 400) is to be made,
- providing the chosen length of profile (16) with the one or more profile bar fixation features (107, 207, 307, 407) for the respective profile bar (100, 200, 300, 400) at predetermined positions,
- fixating the chosen length of profile (16) to a first cutting fixation tool by engagement of a profile bar fixation feature (107, 207, 307, 407) for the respective profile bar (100, 200, 300, 400) and a tool fixation feature (8) of the first cutting fixation tool to each other,
- moving the fixated length of profile (16) into position with respect to a first cutting tool by means of displacing the first cutting fixation tool,
- cutting the fixated length of profile with a first straight cut (101, 201, 301, 401) by means of the first cutting tool, thereby forming a first straight end plane of the respective profile bar (100, 200, 300, 400),
- fixating the same length of profile (16) to a second cutting fixation tool by engagement of the same or another profile bar fixation feature (107, 207, 307, 407) for the respective profile bar (100, 200, 300, 400) and a tool fixation feature (8) of the second cutting fixation tool to each other,
- moving the fixated length of profile (16) into position with respect to a second cutting tool by means of displacing the second cutting fixation tool, and
- cutting the fixated length of profile (16) with a second straight cut (102, 202, 302, 402) by means of the second cutting tool, thereby forming a second straight end plane of the respective profile bar (100, 200, 300, 400).

7. The method according to claim 6, wherein the step of providing the chosen length of profile (16) with the one or more profile bar fixation features (107, 207, 307, 407) comprises the steps of
- fixating the chosen length of profile (16), and
- displacing a fixation feature forming tool with respect to the fixated length of profile (16), the fixation feature forming tool being configured to form the one or more profile bar fixation features (107, 207, 307, 407), preferably simultaneously, and, if there is more than one profile bar fixation feature (107, 207, 307, 407) to be provided, with a predefined mutual distance depending on the profile bar (100, 200, 300, 400) to be formed.

8. The method according to claim 6 or 7, wherein, between the step of choosing the one of the one or more lengths of extruded profile (16) and the step of fixating the chosen length of profile (16) to a first cutting fixation tool, the method further comprises the step of
- drilling or milling out holes and/or recesses (103, 203, 303, 403) in the chosen length of extruded profile (16) at predetermined positions for the mounting of hinges, handles, and other parts, which are to be connected to the respective profile bar (100, 200, 300, 400) when the window part being produced is finished.

9. The method according to claim 8, wherein at least some, preferably all, of the holes and/or recesses (103, 203, 303, 403) are made simultaneously with and, preferably, by the same tool, which is used for making the profile bar fixation feature(s) (107, 207, 307, 407) of the respective profile bar (100, 200, 300, 400).

10. The method according to claim 8 or 9, further comprising, before the step of fixating the chosen length of profile (16) to a first cutting fixation, a step of mounting at least a part of, preferably all, the hinges, handles, and other parts, which are to be connected to the respective profile bar (100, 200, 300, 400), within the holes and/or recesses (103, 203, 303, 403) made for that purpose.

11. The method according to any of the preceding claims, wherein each of the one or more profile bar fixation features (7) comprises a recess in the outer surface of an external wall of the profile bar (1, 2, 13, 14).

12. The method according to claim 11, wherein the maximum depth of the recess is between 0.1 mm and (wall thickness minus 0.1 mm), preferably between 0.3 mm and (wall thickness minus 0.3 mm), such as between 0.5 mm and (wall thickness minus 0.5 mm), where "wall thickness" is the thickness of the external wall in which the recess is made at the position at which the recess is made.

13. The method according to any of the preceding claims, wherein the profile bars (1, 2, 13, 14) are extruded from polyvinylchloride (PVC), such as CPVC (chlorinated PVC), uPVC (unplasticized PVC), rPVC (recycled PVC) or mixtures thereof, or a similar thermoplastic material, such as polypropylene (PP).

14. A window part, in particular a window parts for a roof window, such as a window sash or a window frame, which window part is produced using the method according to any of the preceding claims.

15. A roof window comprising one or more window parts produced using the method according to any of claims 1-13.
